# EUROPEAN PATENT SPECIFICATION

(11) **EP 0 676 917 B1**
(45) Date of publication and mention of the grant of the patent: **15.10.1997**
(21) Application number: 94902906.0
(22) Date of filing: 20.12.1993
(51) Int. Cl.: A01K 11/00

(54) **A DISPENSING DEVICE FOR APPLYING TWO-PART TAGS**
SPENDER UND ANBRINGWERKZEUG FÜR ZWEITEILIGE OHRMARKEN
DISTRIBUTEUR POUR LA POSE DE PLAQUETTES D'OREILLE EN DEUX PARTIES

(30) Priority: 23.12.1992 GB 9226761
(43) Date of publication of application: 18.10.1995
(73) Proprietor: POTTS, Christopher, Cheltenham, Gloucestershire GL54 5SR (GB); POTTS, Nicholas, Newnham-on-Severn, Gloucestershire GL14 1LD (GB)
(72) Inventor: POTTS, Christopher, Cheltenham, Gloucestershire GL54 5SR (GB); POTTS, Nicholas, Newnham-on-Severn, Gloucestershire GL14 1LD (GB)
(74) Representative: Carter, Gerald
(86) International application number: GB9302596
(87) International publication number: WO9414316

(56) References cited:
- EP-A- 0 138 570
- GB-A- 1 415 650
- GB-A- 2 010 727

## Description

The invention relates to a dispensing device for applying two-part tags and particularly, but not exclusively, for dispensing two-part ear tags of the kind used for the identification of livestock.

In one common form of two-part ear tag, each part of the tag includes a disc or similar flat element. One tag part is formed with a spike which may be received in locking engagement within a socket formed on the other part. In use, the part carrying the socket is located on one side of the animal's ear, and the spike on the other part is then driven through the ear and into locking engagement with the socket. One or both of the discs or other flat parts of the tags may then carry data for the purposes of identification of the animal.

In order to apply such a two-part tag to an animal's ear, there is normally supplied a special applicator of pliers-like form having opposed jaws on which the two tag parts may be mounted respectively. Manual closure of the jaws then forces the spike on one part through the ear and into locking engagement with the other part.

However, using such a form of applicator is a time consuming business in view of the necessity of having to extract two different tag parts from a supply of tags, fit the two parts on to the respective jaws of the applicator, and then operate the applicator to apply the tag.

British Patent Specification No. 2010727 discloses an animal ear tag applicator where each of the pivoted jaws of the applicator is provided with a separate supply of ear tag parts. Pivotal closure of the jaws forces the spike on the male tag part on one jaw into locking engagement with the female tag part on the other jaw. Upon separation of the jaws new tag parts may be fed to the ends of the jaws ready for a further operation. The male tag parts are fed automatically, but a new female tag part must be fed by operation of a separate manual feeding device.

The present invention sets out to provide a dispensing device in which pairs of tag parts are fed successively to an operating location on the device where they are driven together and applied to an animal's ear. A large number of animals may therefore be tagged rapidly and with ease.

According to the invention there is provided a dispensing device for applying two-part tags, the device comprising a main body part, means for supporting first and second tag parts in spaced relation at an operating location on the main body part, first and second guideways leading to the operating location and adapted to receive a plurality of first and second tag parts respectively, means being provided to urge the tag parts along their respective guideways towards the operating location, an operating device movable from a rest position to bring a first tag part in the operating location into locking engagement with a second tag part which is also in the operating location but initially spaced from said first tag part, operator controlled actuating means for effecting said movement of the operating device and means for returning the operating device to said rest position, characterised in that said first and second guideways are located in fixed spaced relation on said main body part, and in that said operating device is movable relative to the fixed guideways so as first to detach said first tag part from the first guideway and displace it across the space between the first and second tag parts before moving it into locking engagement with the second tag part.

The operating device may comprise a plunger assembly mounted for reciprocating movement, for example linear reciprocating movement, on the main body part and having a head portion for engagement with said first tag part.

Said head portion of the plunger assembly preferably includes means for releasably gripping said first tag part, during its displacement into locking engagement with the second tag part.

The gripping means may comprise a plurality of spaced gripping elements movably mounted on the plunger assembly and operating means for automatically moving said gripping elements inwardly into gripping engagement with said first tag part as the plunger assembly is moved towards said first tag part.

In a preferred embodiment said plunger assembly comprises a plunger on which said gripping elements are movably mounted, and an operating member capable of limited movement relative to the plunger, the operating member being adapted to effect said inward movement of the gripping elements as a result of said limited relative movement. The operating member may comprise a sleeve which surrounds the plunger, the sleeve having at one end thereof a formation shaped to cooperate with the gripping elements to effect said inward movement of the gripping elements when the sleeve moves relatively to the plunger.

The actuating means may comprise a manually movable member mounted on the body part and coupled to the operating device. For example, the manually movable member may comprise a lever pivotally mounted on the body part and coupled to the operating device by a suitable transmission. The transmission may include a rack and pinion mechanism.

Alternatively, the actuating means may comprise power operated means, such as a fluid actuated piston and cylinder device. The means for returning the operating device to the rest position may comprise spring means, and such spring means may be connected between the actuating means and the main body part.

The means for feeding pairs of first and second tag parts to the operating location may comprise first and second guideways leading to the operating location and adapted to receive a plurality of first and second tag parts respectively, means being provided to urge the tag parts along their respective guideways. Said means may comprise pusher elements engaging those tag parts in the respective guideways which are furthest from the operating location, thereby to push all the tag parts in the guideway towards the operating location. The pusher elements may comprise parts of a single pusher unit.

Spring means, such as a coiled leaf spring, may be provided to urge the pusher elements towards the operating location.

The guideways may include channels which receive portions of the tag parts respectively.

There may be provided, for use with the dispensing device, at least one holder for a plurality of pairs of tag parts, the holder being adapted to support said tag parts in position one next to another in the relationship required for the dispensing device. Preferably the aforesaid guideways are provided on the holder, the holder being adapted to be connected to the main body part of the dispensing device in such manner that the guideways are in the required position with respect to the operating location.

At least one of said guideways may be so shaped as to receive a plurality of tag parts in side-by-side overlapping relationship.

The following is a more detailed description of embodiments of the invention, reference being made to the accompanying drawings in which:
Figure 1 is a side elevation of the parts of one form of two-part tag,
Figure 2 is a side elevation showing the two parts of the tag locked together,
Figure 3 is a sectional view through a dispensing device according to the invention,
Figure 4 is a front view of the dispensing device of Figure 3,
Figure 5 is a cross-section through a tag-holding cartridge for use with the dispenser of Figures 3 and 4, and
Figure 6 is a similar view to Figure 3 of an alternative form of dispenser.

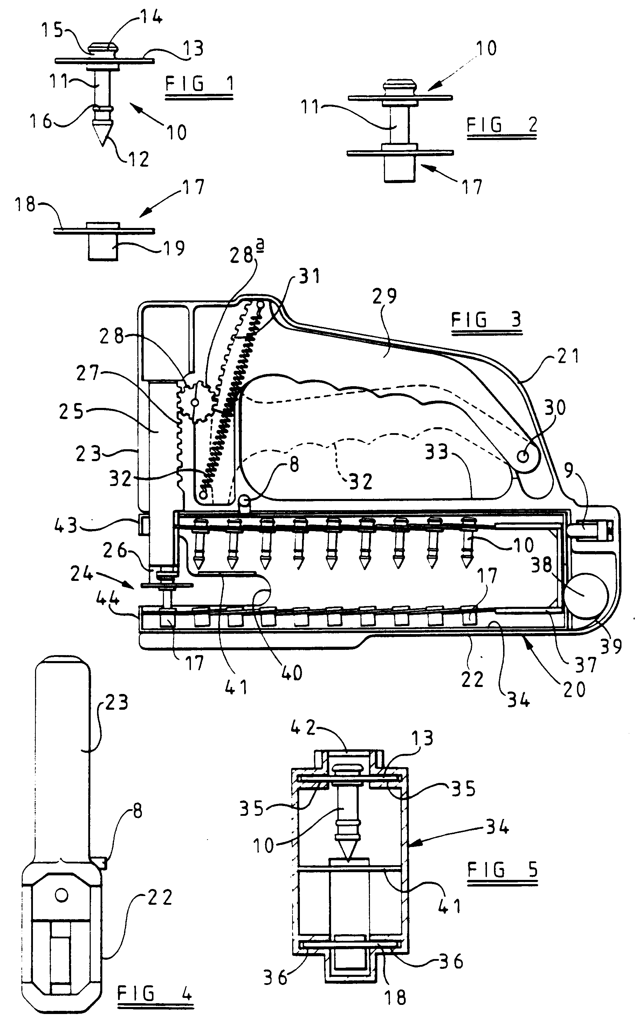

Referring to Figure 1, there is shown a two-part tag of a typical kind with which a dispensing device according to the invention may be employed.

The first part 10 of the tag comprises a spike 11 having a pointed end 12 and, opposite the pointed end, a flat circular disc 13. An enlarged head 14 extends a short distance above the disc 13, being separated therefrom by a neck portion 15.

The conical pointed end portion 12 of the spike 11 is of slightly greater diameter than the main body of the spike and a peripheral ridge 16 extends around the spike a short distance above the pointed end.

The second part 17 of the tag comprises a further circular disc 18 formed on a cylindrical socket part 19, which is formed with an internal circumferential ridge (not shown). The relative diameters of the spike 11 and socket 19, and of the ridges thereon, are such that when the spike 11 is driven into the socket 19, as shown in Figure 2, the end of the spike is firmly retained within the socket by virtue of the inter-engaging ridges on the two parts.

The two parts of the tag may conveniently be moulded from suitable plastics material. Either or both of the discs 13, 18 may have identification marks thereon, or there may be provided a separate larger "flag" carrying the identification information, which flag snaps over the enlarged head 14 on the part 10 of the tag.

It should be stressed that the tag shown in Figures 1 and 2 is only one example of the type of two-part tag to which the invention relates.

As previously mentioned, when it is required to apply a two-part tag of this kind to an animal's ear, the parts are usually fitted to the opposed jaws of an applicator in the general form of a pair of pliers. Manual closure of the jaws forces the spike 11 through the animal's ear and into locking engagement with the socket 19 on the other tag part.

Figures 3 and 4 show in greater detail a dispensing device for applying such tags to animals' ears.

The device comprises a hollow housing 20 which may conveniently be formed in two similar parts moulded from rigid plastics material. Only one half of the housing is shown in Figure 3. The housing provides a handle 21, a storage chamber 22 and an operating chamber 23. An operating location, generally indicated at 24, is disposed at the end of the storage chamber 22 adjacent the operating chamber 23.

A plunger 25 is reciprocally mounted in the operating chamber 23 for vertical sliding movement and the lower end of the plunger has a head portion 26 shaped to engage the head portion 14 of a tag part 10, in a manner to be described. The plunger 25 is slidably mounted in bearings in the chamber 23 and carries along one edge a toothed rack 27 with which meshes a rotatably pinion 28 mounted on the housing for rotation about a fixed axis.

An operating lever 29 is pivotally mounted at one end to the handle 21, as indicated at 30, and is formed at the other end with an arcuate toothed rack 31 which is centred about the pivot axis 30 of the lever and is in meshing engagement with a pinion 28a which is co-axial with the pinion 28, and rotates therewith. A helical tension spring 32 is connected between the free end of the lever 29 and a fixed part of the housing to urge the lever 29 to the position shown in dotted lines at 32 in Figure 3. In this position the lever 29 extends partly across an aperture 33 in the housing between the handle 21 and the storage compartment 22, but leaving space for an operator's fingers to be inserted beneath the lever 29 when holding the handle 21. In this position of the lever 29 the plunger is in an uppermost position.

By squeezing the lever 29 upwardly from the position shown in dotted lines in Figure 3 to the position shown in full lines, the arcuate toothed rack 31 rotates the pinion 28 anti-clockwise (as seen in Figure 3) which in turn drives the plunger 25 downwardly. The relative diameters of the pinions 28 and 28a are selected to provide a required mechanical advantage ratio between movement of the lever 29 and corresponding movement of the plunger 25.

The tension spring 32 may, if required, be replaced by a compression spring disposed between the upper surface of the lever 29 and the internal upper surface of the main body part 21. Such compression spring may, for example, comprise a generally V-shaped spring in which the two arms of the spring engage the lever 29 and body part 21 respectively, and are integrally connected by a coiled spring portion.

Removably located in the storage compartment 22 of the housing is a replaceable holder or cartridge 34 which contains a supply of pairs of tag parts 10 and 17.

The cartridge 34, which may be moulded from lightweight plastics material, is of generally rectangular cross-section, as shown in Figure 5, and comprises a pair of facing opposed channels 35 in the upper portion thereof, and another pair of facing opposed channels 36 in the lower portion thereof. The upper channels 35 receive opposite sides of the discs 13 of a series of tag parts 10 whereas the lower channels 36 receive opposite sides of the discs 18 of a series of tag parts 17. As best seen in Figure 3, the discs of adjacent tags overlap. This allows a greater number of tags to be accommodated in the cartridge 34 than would be the case if the tags were simply disposed side-by-side in abutting relationship along the channels.

The discs of the tag parts furthest from the operating location 24 are engaged by a pusher element 37 which is in turn engaged by a circular reel 38 which is connected to one end of a leaf spring 39. The opposite end of the leaf spring 39 is connected to the housing 20 in the vicinity of the operating location 24. The spring 39 tends to coil up, thus thrusting the reel 38 against the pusher 37, and thereby urging the two rows of tag parts towards the operating location 24.

Adjacent the operating location 24 the side walls of the cartridge 34 are cut away, as indicated at 40, and are supported by a short transverse horizontal wall 41 spaced away from the path of movement of the plunger 25. The upper part of the cartridge 34 is provided with an aperture 42 through which the plunger may pass downwardly.

The dispensing device operates as follows:

The plunger 25 is initially in its uppermost retracted position, which allows a cartridge full of tag parts 10 and 17 to be inserted into the storage chamber 22. As the cartridge is inserted the reel 38, which is initially adjacent the operating location 24, is pushed to the rear of the storage compartment 22 thus tensioning the spring 39. The tension in the spring 39 thus urges the rows of tag parts towards the operating location. The disc on the leading upper tag part 10 is urged against a front wall 43 on the cartridge and the disc on the corresponding lower tag part 17 is urged against a front wall part 44 on the cartridge. As the cartridge 34 is pushed into the compartment 22 in the housing, its end wall depresses a spring-loaded ejection plunger in the end wall of the compartment, and when the cartridge is fully home a spring-loaded catch 8 on the housing snaps into engagement with an abutment (not shown) on the cartridge to retain it within the housing. The dispenser is then loaded ready for use.

To apply a tag to an animal's ear, a portion of the ear is passed into the cut away portion 40 of the cartridge, the sides of the housing being similarly cut away, so as to lie between the leading upper tag part and the leading lower tag part 17. The operator then squeezes the lever 29 upwardly into alignment with the handle 21 forcing the plunger 25 downwardly. The head 26 of the plunger engages the upper part of the tag 10 and carries the tag downwardly, forcing its spike 11 through the animal's ear and into engagement with the opposed lower tag part 17 to which it becomes locked. Release of the lever 29 causes it to be returned to its initial position by the spring 32, withdrawing the plunger 25 upwardly so that the animal's ear, together with the tag, can be released from the slot in the dispensing device. As the plunger is retracted and the ear and tag removed, the remaining tag parts in the cartridge are urged forwardly to bring another pair on to opposite sides of the operating location.

When the cartridge is empty, the operator simply removes the cartridge from the storage chamber 22 and inserts a new cartridge, thus allowing a large number of animals to be tagged in rapid succession. The cartridge is removed by depressing the catch 8. This releases the cartridge, allowing the spring-loaded plunger 9 to push it partly out of the compartment 22 so that it can be gripped by the operator's fingers and removed.

The cartridges 34 may be reloaded, but preferably they are disposable, being formed of cheap moulded plastics and each being discarded when empty.

Although the described arrangement is preferred in which a cartridge preloaded with tag parts is inserted into a chamber in the dispensing device, the invention does not exclude arrangements in which the channels or other guideways for the tag parts are part of the structure of the dispensing device itself. In this case the tag parts would not be loaded in a cartridge but would have to be loaded individually into the dispenser between each series of operations. It will be appreciated, therefore, that the use of a cartridge system provides a major advantage in speed and convenience.

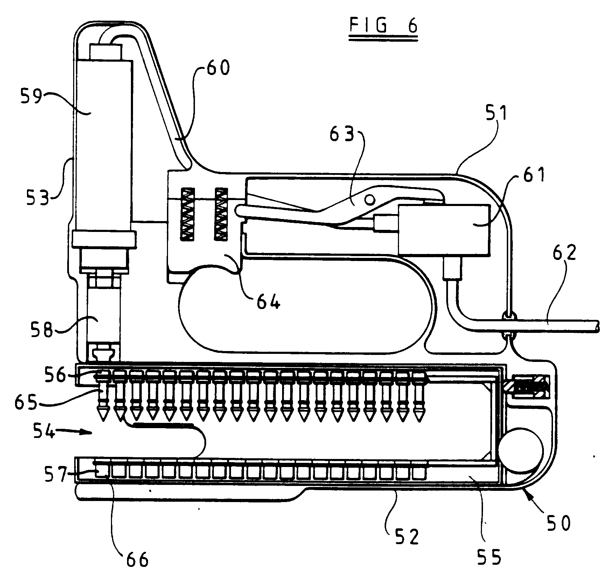

The device shown in Figures 3 and 4 is manually operated, and Figure 6 shows diagrammatically a similar view to Figure 3 of an alternative power operated dispenser.

In this case the general configuration of the dispenser housing 50 is similar to that of the Figure 3 arrangement, being provided with a handle part 51, a storage compartment 52, an operating compartment 53 and an operating location 54. The cartridge 55 is essentially similar to the cartridge 34 of the previous arrangement but is shown in Figure 6 as containing tag parts of a different type. In this arrangement each tag part, instead of being provided with a disc, is provided with simple rectangular flanges which extend from each side of the head 56 or socket 57 of the tag part but are generally of the same width as the diameter of the head or socket. The flanges therefore extend into the opposed channels in the cartridge 55, in similar fashion to the arrangement of Figure 5, but due to the narrowness of the flanges these do not overlap and the tag parts are in simple abutting relationship side-by-side, as shown in Figure 6.

In the power driven arrangement of Figure 6, the plunger 58 is connected to the piston of a fluid operated piston and cylinder assembly 59. The assembly, which may be driven by compressed air, is connected through a pipe 60 to a control valve 61 which may be operated selectively to place the pipe 60 in communication with a supply pipe 62 for air under pressure, or with the atmosphere. The valve 61 is operated through a pivoting arm 63 by a spring-loaded push button 64 which may be depressed by the finger of an operator when grasping the handle 51.

When the push button 64 is depressed the valve 61 is operated to place the cylinder assembly 59 in communication with the air under pressure, causing the plunger 58 to be driven downwardly, thus driving the leading upper tag part 65 downwardly through the animal's ear and into locking engagement with the lower tag part 66.

For convenience the supply of air, or other gas, under pressure may be provided by a portable pressurised cylinder of a type which is commonly available.

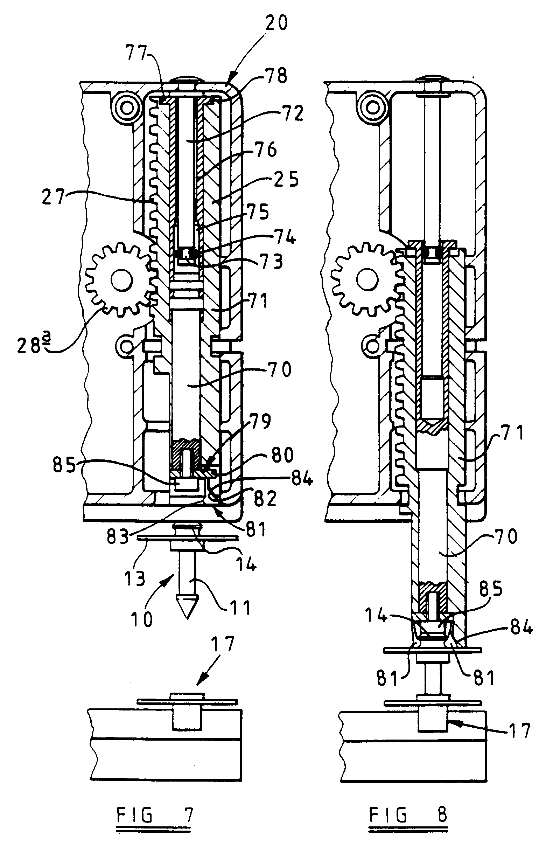

In the above-described arrangements, it is desirable for the lower end of the plunger 25 or 58 to grip the head of the upper tag part positively as it moves the tag part downwards into engagement with the lower tag part. Such positive gripping will reduce any tendency for the upper tag part to become deflected as it passes through the animal's ear and ensures that its alignment with the lower tag part is maintained. Figures 7 and 8 show a modified and preferred plunger assembly which includes an effective arrangement for positively gripping the upper tag part. Figures 7 and 8 show a plunger assembly on a manually operated version of the dispensing device, but it will be appreciated that, with suitable modification, an arrangement of the kind described might also be used with the air powered version.

Referring to Figures 7 and 8: the plunger assembly 25 comprises a generally cylindrical inner plunger 70 surrounded by an outer sleeve 71 within which the inner plunger is longitudinally slidable. The outer sleeve carries the aforementioned toothed rack 27 with which the pinion 28a is in driving engagement.

The inner plunger 70 is vertically slidable on a fixed shaft 72 which extends downwardly from the upper part of the casing 20 of the dispensing device. The lower end of the shaft 72 is formed with an annular groove 73 which receives an O-ring 74. The O-ring 74 is a loose sliding fit in a cylindrical chamber 75 in the plunger 70. The chamber 75 communicates with an upper cylindrical bore 76 in the plunger which surrounds the shaft 72. The diameter of the bore 76 is such that when the O-ring 74 enters the bore 76, as will be described below, the bore is a tight but sliding fit over the O-ring 74.

The upper end of the inner plunger 70 is formed with an outer peripheral flange 77 which, in the initial position, is received within a corresponding annular recess 78 in the upper end of the sleeve 71.

Mounted on the lower end of the inner plunger 70 is a gripping device 79 which comprises a disc-like member 80 from which depend three circumferentially spaced resiliently flexible gripping elements 81, only one of the elements 81 being visible in Figure 7. Each gripping element 81 is part-annular as viewed in plan, and is generally triangular in cross-section to provide an outer part-conical surface 82 and an inner part-toroidal surface 83. The outer part-conical surfaces 82 of the gripping elements cooperate with an internal part-conical surface 84 formed on the lower end of the sleeve 71.

The gripping arrangement operates as follows:

During the initial downward movement of the plunger assembly 25 the sleeve 71 and inner plunger 70 move together in the relative position shown in Figure 7, the chamber 75 in the plunger sliding freely over the O-ring 74. In this position the three resiliently flexible gripping elements 81 are urged outwardly, by their resilience, against the part-conical surface 84 on the sheath 71 and are thus separated from one another. As the plunger assembly moves downwards the gripping elements 81 move past the head 14 on the upper tag part 10 which is opposite the plunger until an abutment 85 on the plunger engages the head 14. This engagement temporarily restrains further downward movement of the inner plunger 70 but the outer sleeve 71 continues to move downwards relative to the inner plunger 70.

As the outer sleeve 71 moves downwards relative to the inner plunger 70, the engagement of the conical surface 84 on the sleeve against the conical surfaces 82 on the gripping elements 81 forces the gripping elements inwardly so that they close around the head 14 of the upper tag part and grip it. The head 14 is formed with a peripheral groove of arcuate section to receive the part-toroidal inner portions of the gripping elements. Figure 8 shows this engagement between the gripping elements 81 and the head 14 at a later stage in the operation of the dispensing device.

Continued downward movement of the sleeve 71 carries the inner plunger 70 and upper tag part 10 with it, as shown in Figure 8, until the spike 11 on the upper tag part engages the lower tag part 17 in the manner previously described. During this latter part of the downward movement of the inner plunger 70, with the sleeve 71, the bore 76 in the inner plunger 70 passes over the O-ring 74. Since the O-ring 74 is a tighter sliding fit in the bore 76 this tends to apply a restraining force to the downward movement of the inner plunger 70. This ensures that the outer sleeve 71 must always apply a downward force to the inner plunger 70, thus ensuring that the gripping elements 81 are constantly urged inwardly by their engagement with the part-conical surface 84 on the sleeve 71. This positive gripping of the head 14 of the upper tag part 10 ensures that the tag part does not become displaced or deflected as it is thrust downwards.

Once the two parts of the tag are engaged, the operating lever of the dispensing device is released, rotating the pinion 28a in the opposite direction to retract the plunger assembly 25 upwardly again. Initially, however, as the sleeve 71 begins to move upwardly, the inner plunger 70 is temporarily restrained against upward movement by the frictional engagement between the O-ring 74 and the bore 76 in the plunger 70, so that the sleeve 71 moves upwardly relative to the inner plunger 70. The upward movement of the part-conical surface 84 relative to the gripping elements 81 allows the gripping elements to move outwardly, due to their resilience, and disengage from the head 14 of the upper tag part. After this initial upward relative movement the annular recess 78 in the upper end of the sleeve 71 engages the flange 77 on the inner plunger 70 so that the two parts of the plunger assembly then move upwardly together back to the initial position shown in Figure 7, ready for another dispensing operation to be performed.

## Claims

1. A dispensing device for applying two-part tags, the device comprising a main body part (20), means for supporting first and second tag parts (10,17) in spaced relation at an operating location (24) on the main body part, first and second guideways (35,36) leading to the operating location and adapted to receive a plurality of first and second tag parts respectively, means (37,38,39) being provided to urge the tag parts along their respective guideways towards the operating location, an operating device movable from a rest position to bring a first tag part (10) in the operating location (24) into locking engagement with a second tag part (17) which is also in the operating location (24) but initially spaced from said first tag part (10), operator controlled actuating means (29) for effecting said movement of the operating device (25) and means (32) for returning the operating device (25) to said rest position, characterised in that said first and second guideways (35,36) are located in fixed spaced relation on said main body part (20), and in that said operating device (25) is movable relative to the fixed guideways (35) so as first to detach said first tag part (10) from the first guideway and displace it across the space between the first and second tag parts before moving it into locking engagement with the second tag part (17).

2. A dispensing device according to Claim 1, wherein the operating device comprises a plunger assembly (25) mounted for reciprocating movement on the main body part (20) and having a head portion (26) for engagement with said first tag part (10).

3. A dispensing device according to Claim 2, wherein the plunger assembly (25) is mounted for linear reciprocating movement on the main body part (20).

4. A dispensing device according to Claim 2 or Claim 3, wherein said head portion (26) of the plunger assembly includes means (81) for releasably gripping said first tag part (10), during its displacement into locking engagement with the second tag part (17).

5. A dispensing device according to Claim 4, wherein said gripping means comprise a plurality of spaced gripping elements (81) movably mounted on the plunger assembly and operating means (71,84) for automatically moving said gripping elements inwardly into gripping engagement with said first tag part (10) as the plunger assembly is moved towards said first tag part.

6. A dispensing device according to Claim 5, wherein said plunger assembly comprises a plunger (70) on which said gripping elements (81) are movably mounted, and an operating member (71) capable of limited movement relative to the plunger, the operating member being adapted to effect said inward movement of the gripping elements as a result of said limited relative movement.

7. A dispensing device according to claim 6, wherein said operating member comprises a sleeve (71) which surrounds said plunger (70), said sleeve having at one end thereof a formation (84) shaped to cooperate with said gripping elements (81) to effect said inward movement of the gripping elements when the sleeve moves relatively to the plunger.

8. A dispensing device according to any of Claims 1 to 7, wherein the actuating means comprise a manually movable member (29) mounted on the body part (20) and coupled to the operating device (25).

9. A dispensing device according to Claim 8, wherein the manually movable member comprises a lever (29) pivotally mounted on the body part (20) and coupled to the operating device by a transmission mechanism (27,28,31).

10. A dispensing device according to Claim 9, wherein said transmission mechanism (27,28,31) comprises a rack and pinion mechanism.

11. A dispensing device according to any of Claims 1 to 7, wherein the actuating means comprise power operated means (58,59).

12. A dispensing device according to Claim 11, wherein the power operated means comprise a fluid actuated piston and cylinder device (59).

13. A dispensing device according to any of Claims 1 to 12, wherein the means for returning the operating device to the rest position comprise spring means (32) connected between the actuating means and the main body part.

14. A dispensing device according to any of Claims 1 to 13, wherein said means to urge the tag parts along their respective guideways (35,36) comprise pusher elements (37) engaging those tag parts in the respective guideways which are furthest from the operating location, thereby to push all the tag parts in the guideway towards the operating location.

15. A dispensing device according to Claim 14, wherein said pusher elements comprise parts of a single pusher unit 37.

16. A dispensing device according to Claim 14 or Claim 15, wherein spring means (39) are provided to urge the pusher elements (37) towards the operating location.

17. A dispensing device according to any of Claims 14 to 16, wherein said guideways (35,36) include channels which receive portions of the tag parts respectively.

18. A holder (34) for a plurality of first and second tag parts (10, 17), for use with the dispensing device according to any of the preceding claims, the holder being adapted to support said first and second tag parts (10, 17) in position one next to another such that a second tag part (17) is spaced from a first tag part (10) in an operating location (24), while guideways (35, 36), adapted to receive a plurality of first and second tag parts (10, 17) respectively, are provided on the holder and lead to the operating location (24) in a spaced relation, such that the holder is adapted to be connected to the main body part (20) of the dispensing service, characterised in that the spaced relation of the guideways (35, 36) is fixed.

19. A holder according to Claim 18, wherein at least one of said guideways (35,36) is so shaped as to receive a plurality of tag parts (10,17) in side-by-side overlapping relationship.

## Patentansprüche

1. Spender zum Anbringen von zweiteiligen Marken, bestehend aus einem Hauptkörperteil (20), Mittel zum Tragen der ersten und zweiten Marketeilchen (10,17) in gegenseitigem Abstand in einem Betriebsort (24) auf dem Hauptkörperteil, erste und zweite Leitwege (35,36), welche zu dem Betriebsort führen und zur Aufnahme einer Vielzahl von ersten und zweiten Marketeilchen jeweils ausgelegt sind, wobei Mittel (37,38,39) vorgesehen sind, um die Marketeilchen entlang ihrer jeweiligen Leitweg in Richtung des Betriebsortes zu zwingen, eine Betriebsvorrichtung, welche aus einer Ruhestellung beweglich ist, um einen ersten Marketeil (10) in die Betriebsstelle (24) in verriegelten Eingriff mit einem zweiten Marketeil (17) zu bringen, welcher sich auch an der Betriebsstelle (24) befindet, aber anfangs vom ersten Marketeil getrennt war, eine von einer Betriebsperson gesteuerten Betätigungseinrichtung (29), um die Bewegung der Betriebsvorrichtung (25) durchzuführen und Mittel (32) zum Zurückbringen der Betriebsvorrichtung (25) in die Ruhestellung, dadurch gekennzeichnet, dass die ersten und zweiten Leitwege (35,36) auf dem Hauptkörperteil (20) in festem Abstand voneinander angeordnet sind und, dass die Betriebsvorrichtung (25) relativ zu den feststehenden Leitwegen (35) bewegbar ist, um so den ersten Marketeil (10) von dem ersten Leitweg abzunehmen und ihn quer durch den Raum zwischen den ersten und zweiten Marketeilen zu bewegen, bevor er in blockierten Eingriff mit dem zweiten Marketeil (17) gebracht wird.

2. Spender nach Anspruch 1, bei welchem die Betriebsvorrichtung aus einer Kolbenanordnung (25) besteht, welcher zur Hin- und Herbewegung auf dem Hauptkörperteil (20) montiert ist und einen Kopfteil (26) zur Berührung des ersten Marketeiles (10) hat.

3. Spender nach Anspruch 2, bei welchem die Kolbeneinrichtung (25) auf dem Hauptkörperteil (20) zur linearen Hin- und Herbewegung montiert ist.

4. Spender nach Anspruch 2 oder 3, bei welchem der Kopfteil (26) der Kolbenanordnung Mittel (81) zum lösbaren Greifen des ersten Marketeils (10) während seiner Bewegung in den blockierenden Eingriff mit dem zweiten Marketeil (17) hat.

5. Spender nach Anspruch 4, bei welchem die Greifmittel eine Vielzahl von in Abstand angeordneten Greifelementen (81) hat, welche beweglich auf der Kolbenanordhung montiert sind, sowie Betätigungsmittel (71,84) zum automatischen nach innen Bewegen der Greifelemente in greifende Berührung mit dem ersten Marketeil (10), wenn die Kolbenanordnung in Richtung des ersten Marketeils bewegt wird.

6. Spender nach Anspruch 5, bei welchem die Kolbenanordnung einen Kolben (70) hat, auf welchem die Greifelemente (81) beweglich montiert sind, sowie ein Betätigungselement (71), welches eine begrenzte Bewegung bezüglich des Kolbens ausführen kann, wobei das Betätigungselement ausgelegt ist, um die nach innen gerichtete Bewegung der Greifelemente als Folge der begrenzten Relativbewegung zu bewirken.

7. Spender nach Anspruch 6, bei welchem das Betätigungselement eine Hülse (71) hat, welche den Kolben (70) umgibt, wobei die Hülse an einem ihrer Enden eine Ausbildung (84) hat, welche geformt ist, um mit den Greifelementen (81) zusammenzuwirken, um die nach innen gerichtete Bewegung der Greifelemente zu bewirken, wenn die Hülse sich bezüglich des Kolbens bewegt.

8. Spender nach einem der Ansprüche 1 bis 7, bei welchem die Betätigungseinrichtung ein von Hand bewegliches Element (29) umfasst, welches auf dem Körperteil (20) montiert und mit der Betätigungseinrichtung (25) gekoppelt ist.

9. Spender nach Anspruch 8, bei welchem das von Hand bewegbare Element einen auf dem Körperteil (20) schwenkbar montierten Hebel (29) umfasst, welcher über einen Übertragungsmechanismus (27,28,31) mit der Betriebsvorrichtung gekoppelt ist.

10. Spender nach Anspruch 9, bei welchem der Übertragungsmechanismus (27,28,31) ein Zahnstangenmechanismus ist.

11. Spender nach einem der Ansprüche 1 bis 7, bei welchem die Betätigungseinrichtung eine motorgetriebene Einrichtung (58,59) ist.

12. Spender nach Anspruch 11, bei welchem die motorgetriebene Einrichtung eine von einem Fluidum betätigte Kolben- und Zylindereinrichtung (59) ist.

13. Spender nach einem der Ansprüche 1 bis 12, bei welchem die Mittel zum Zurückführen der Betriebseinrichtung in die Nullstellung eine Federeinrichtung (32), welche die Betätigungseinrichtung mit dem Hauptkörperteil verbindet, ist.

14. Spender nach einem der Ansprüche 1 bis 13, bei welchem die Mittel zum Zwingen der Marketeile entlang ihres jeweiligen Leitweges (35,36) Schiebeelemente (37) aufweist, welche jene Marketeilchen in dem jeweiligen Leitweg berühren, die am weitesten weg von der Betriebsstelle sind, um so alle Markenteile in dem Führungsweg in Richtung der Betriebsstelle zu schieben.

15. Spender nach Anspruch 14, bei welchem die Schiebeelemente Teile einer einzigen Schiebeeinheit (37) sind.

16. Spender nach Anspruch 14 oder 15, bei welchem die Federeinrichtung (39) vorgesehen ist, um die Schiebeelemente (37) in Richtung der Betriebsstelle zu zwingen.

17. Spender nach einem der Ansprüche 14 bis 16, bei welchem die Leitwege (35,36) Kanäle sind, welche Teile der jeweiligen Marketeile aufnehmen.

18. Halter (34) für eine Vielzahl von ersten und zweiten Marketeile (10,17) zur Verwendung in einem Spender nach einem der vorangehenden Ansprüche, wobei der Halter ausgelegt ist, um die ersten und zweiten Marketeile (10,17) nebeneinander in Stellung zu halten, so dass ein zweiter Marketeil (17) sich in Abstand vom ersten Marketeil (10) in der Betriebsstelle (24) befindet, während Leitwege (35,36), welche zur Aufnahme einer Vielzahl der ersten und zweiten Marketeile (10,17) jeweils ausgelegt sind, auf dem Halter vorgesehen sind und in Abstand voneinander zu der Betriebsstelle (24) führen, so dass der Halter ausgelegt ist, um mit dem Hauptkörperteil (20) des Spenders verbunden zu werden, dadurch gekennzeichnet, dass die Abstandsbeziehung der Leitwege (35,36) zueinander fest ist.

19. Halter nach Anspruch 18, bei welchem wenigstens einer der Leitwege (35,36) so geformt ist, dass er eine Vielzahl von Marketeilchen (10,17) nebeneinander, in überlappender Anordnung, aufnehmen kann.

## Revendications

1. Dispositif distributeur pour la pose de plaquettes d'identification en deux parties, comprenant une partie de corps principale (20), des moyens pour porter les première et seconde parties (10,17) de la plaquette d'identification espacées l'une de l'autre en un endroit d'opération (24) sur la partie de corps principale, des premier et second guides (35,36) menant vers l'endroit d'opération et adaptés pour recevoir une pluralité de première et seconde parties de plaquettes d'identification, respectivement, des moyens (37,38,39) étant prévus pour forcer les parties de plaquettes le long de leur guide respectif vers l'endroit d'opération, un dispositif d'opération mobile à partir d'une position de repos pour amener une première partie (10) de plaquette dans l'endroit d'opération (24) dans une position verrouillée avec une seconde partie (17) de plaquette qui se trouve également dans l'endroit d'opération (24), mais qui était d'abord espacée de ladite première partie (10) de plaquette, un moyen d'actionnement (29) commandé par un opérateur pour effectuer ledit mouvement du dispositif d'opération (25) et un moyen (32) pour retourner le dispositif d'opération (25) vers ladite position de repos, caractérisé en ce que lesdits premier et second guides (35,36) se trouvent à une distance fixe sur la partie (20) de corps principale, et en ce que le dispositif d'opération (25) est mobile par rapport aux guides fixes (35) de sorte à détacher d'abord ladite première partie (10) de plaquette dudit premier guide et de le déplacer à travers l'espace entre lesdites première et seconde parties de plaquettes pour l'amener en position verrouillée avec ladite seconde partie (17) de plaquette.

2. Distributeur selon la revendication 1, dans lequel ledit dispositif de fonctionnement est un ensemble à piston (25) monté pour pouvoir exécuter un mouvement de va-et-vient sur ladite partie (20) de corps principale et comprenant une partie de tête (26) pour entrer en contact avec ladite première partie (10) de plaquette.

3. Distributeur selon la revendication 2, dans lequel ledit ensemble à piston (25) est monté de façon à pouvoir exécuter un mouvement linéaire de va-et-vient sur ladite partie (20) de corps principale.

4. Distributeur selon la revendication 2 ou 3, dans laquelle ladite partie de tête (26) de l'ensemble à piston comprend un moyen (81) pour saisir de façon détachable ladite première partie (10) de plaquette pendant son déplacement dans la position verrouillée avec la seconde partie (17) de plaquette.

5. Distributeur selon la revendication 4, dans lequel ledit moyen pour saisir comprend une pluralité d'éléments (81) pour saisir, espacés, montés de façon mobile sur l'ensemble à piston et des moyens d'opération (71,84) pour automatiquement déplacer lesdits éléments pour saisir vers l'intérieur dans la position de saisie avec ladite première partie (10) de plaquette, quand l'ensemble à piston est déplacé vers ladite première partie de plaquette.

6. Distributeur selon la revendication 5, dans lequel ledit ensemble à piston comprend un piston (70) sur lequel lesdits éléments (81) pour saisir sont montés de façon mobile, et un membre d'opération (71) capable d'exécuter un mouvement limité par rapport audit piston, ledit membre de fonctionnement étant adapté pour réaliser ledit mouvement vers l'intérieur des éléments pour saisir, quand la douille se déplace par rapport au piston.

7. Distributeur suivant la revendication 6, dans lequel ledit élément d'opération comprend une douille (71) qui entoure le piston (70), ladite douille ayant à une de ses extrémités une formation formée de sorte à coopérer avec lesdits éléments pour saisir pour effectuer ledit mouvement vers l'intérieur par rapport au piston.

8. Distributeur selon une des revendications 1 à 7, dans lequel le moyen d'actionnement est un élément (29) manuellement mobile, monté sur la partie de corps (20) et couplé au dispositif d'opération (25).

9. Distributeur selon la revendication 8, dans lequel ledit élément manuellement mobile est un levier (29) monté de façon à pouvoir pivoter sur ladite partie de corps (20) et couplé au dispositif de fonctionnement au moyen d'un mécanisme de transmission (27,28,31).

10. Distributeur selon la revendication 9, dans lequel ledit moyen de transmission (27,28,31) comprend un mécanisme à crémaillère.

11. Distributeur selon une quelconque des revendications 1 à 7, dans lequel le moyen d'actionnement est un moyen (58,59) actionné par moteur (58,59).

12. Distributeur selon la revendication 11, dans lequel le moyen actionné par moteur est un dispositif (59) à piston et cylindre actionné par fluide.

13. Distributeur selon une quelconque des revendications 1 à 12, dans lequel ledit moyen pour retourner le dispositif d'opération dans la position de repos est un moyen de ressort (32) connecté entre ledit moyen d'actionnement et la partie de corps principale.

14. Distributeur selon une quelconque des revendications 1 à 13, dans lequel ledit moyen pour forcer lesdites parties de plaquette le long de leur guide (35,36) respectif, comprend des éléments de poussée (37) contactant lesdites parties de plaquettes dans le guide respectif, qui sont le plus éloignées de l'endroit d'opération, poussant ainsi toutes les parties de plaquette dans le guide vers l'endroit d'opération.

15. Distributeur selon la revendication 14, dans lequel lesdits éléments de poussée sont des parties d'une unité de poussée (37) unique.

16. Distributeur selon la revendication 14 ou 15, dans lequel ledit moyen ressort (39) est prévu pour forcer les éléments de poussée (37) vers l'endroit de fonctionnement.

17. Distributeur selon une quelconque des revendications 14 à 16, dans lequel lesdits guides (35,36) sont des canaux qui reçoivent des parties des portions des parties de plaquette, respectivement.

18. Dispositif (34) pour porter une pluralité de première et seconde parties (10,17) de plaquette destinées à être utilisées dans un distributeur selon une quelconque des revendications précédentes, ledit dispositif porteur étant adapté pour porter lesdites première et seconde parties (10,17) de plaquette, l'une à côté de l'autre, de sorte qu'une seconde partie (17) de plaquette est espacée d'une première partie (10) de plaquette dans un endroit d'opération (22), tandis que les guides (35,36) adaptés pour recevoir une pluralité desdits première et seconde parties (17) de plaquette, respectivement, sont prévus sur le dispositif porteur et l'aident vers ledit endroit de fonctionnement (24) tout en étant espacés, tel que le dispositif porteur est adapté pour être connecté à ladite partie (20) de corps principal du distributeur, caractérisé en ce que l'éloignement des guides (35,36) est fixé.

19. Dispositif porteur selon la revendication 18, dans lequel au moins un des guides (35,36) est formé de sorte à recevoir une pluralité de parties (10,17) de plaquette l'une à côté de l'autre de façon à chevaucher.
